# EUROPEAN PATENT APPLICATION

(11) **EP 0 958 894 A2**
(43) Date of publication of application: **24.11.1999**
(21) Application number: 99303589.8
(22) Date of filing: 07.05.1999
(51) Int. Cl.: B25D 1/00, B25C 5/00

(54) **Hammer-type stapler**

(30) Priority: 09.05.1998 GB 9809846
(71) Applicant: Glynwed Pipe Systems Limited, Bretfield Court, Dewsbury WF12 9DB (GB)
(72) Inventor: Cave, Neil, c/o Durapipe S & LP, Bretfield Court, Dewsbury WF12 9DB (GB)
(74) Representative: Pawlyn, Anthony Neil

(57) **Abstract**

A clamp is provided comprising a first pair of arms on first mounting and a second pair of arms on a second mounting, the first and second mountings being connected to one another and spaced from one another by linking means, each arm carrying a clamping surface which opposes a clamping surface on another arm, the spacing between the opposing clamping surface being adjustable.

The clamp offers a particularly versatile means for fixing the position of, for instance, two items during electrofusion welding, particularly when the means for adjusting the spacing between the opposing clamping surfaces comprise an element mounted on one of the arms and passing through a slot in the opposing arm and / or where the spacing between the first pair of arms and the second pair of arms is variable, for instance through slidable mountings, and / or where the angular position of one pair of arms relative to the other is variable, for instance via rotation.

## Description

This invention concerns improvements in and relating to clamping, particularly, but not exclusively, clamping of components during electrofusion operations.

Clamps are known which can accommodate a variety of pipe sizes and hold them firmly together. An example of such a clamp is disclosed in GB-A-2226522 in which the pipes are held between profiles, the profiles being mounted on the ends of two pairs of arms. The arms of a pair are pivotally mounted and the separation of opposing profiles mounted on the arms can be varied using a single centrally provided adjustment unit.

Whilst the system is suitable for many tasks it does have limitations.

The present invention aims to provide a more versatile system, capable of accommodating a variety of different pipe sizes and configurations, involving the use of a single clamp.

According to a first aspect of the invention we provide a clamp, wherein the clamp comprises a first pair of arms on a first mounting and a second pair of arms on a second mounting, the first and second mountings being connected to one another and spaced from one another by linking means, each arm carrying a clamping surface which opposes a clamping surface on another arm, the spacing between the opposing clamping surfaces being adjustable.

In a first particularly preferred form the means for adjusting the spacing between the opposing clamping surfaces are mounted on the arms carrying the clamping surfaces. Separate adjusting means are preferably provided for each pair of arms.

The adjusting means may comprise an element, such as a circular cross-sectioned bar, mounted on one of the arms and passing through a slot in the opposing arm. The slot preferably extends along the length of the arm, from the pivotal mounting towards the end of the arm. Preferably the element is provided with a threaded portion. The threaded portion preferably engages with a threaded portion of a component provided on the outside of the slot. Preferably the component is dimensioned relative to the slot such that it cannot pass through the slot upon rotation. Preferably rotation of the component causes abutment with the arm and reduction of the spacing of the opposing arms. The component may be rotated by a handle mounted thereon.

Preferably the adjustment means are provided intermediate the pivotal mounting and the clamping surface, for instance between ¼ and ½ way from the pivot to the end of the arm.

In a second particularly preferred form the spacing between the first pair of arms and the second pair of arms and/or between their respective mountings may be variable. The variation may be provided by a slideably mounting, for instance of one or both of the mountings on the linking means.

The linking means may comprise one or more elongate elements, for instance bars. Preferably the elements are parallel to each other. Preferably the elements are of consistent cross-section. The elements may be circular cross-section bars. Preferably two elements are provided.

The slideable mounting or mountings may be provided with through passages corresponding to the cross-sectional profile of the components on which they slide, such as the linking means.

The slideable mounting or mountings may be provided with securing means for fixing the position of the mounting. A rotatable handle may be used as the securing means, for instance by clamping onto the linking means.

The separation between the first and second pairs of arms may be adjustable between 30mm and 500mm and more preferably between 70mm and 200mm.

In a third particularly preferred form the angular orientation of the first pair of arms and/or the second pair of arms can altered relative to the other pair. One pair of arms may be provided at a plurality of angles relative to the another.

Preferably the plurality of angles is provided by rotation. The first and/or the second mountings may be rotated relative to the linking means to achieve the different angles. The first and/or second mountings may be rotatably mounted on blocks forming part of the linking means. An axis of rotation centrally provided between the particular pair of opposing arms may be used. The linking means, particularly the blocks, may be provided with releaseable means to secure the angular position. The angular position may be secured by a clamping action. The clamping action may be controlled by a handle, for instance mounted on the surface of the block opposing the arms.

The adjustment of the angular position may be restricted within predetermined limits. The limits may be defined by the maximum extent of travel of a protrusion on one element relative to a groove on another element relative to which it moves during angular variation. The protrusion may be a pin, preferably cooperating with a arcuate groove. The pin may be provided in the mounting and the groove in the block of the linking means or vice versa.

The adjustment of the angular position may be indexed. The indexing may be provided by cooperating of a protrusion on one element with one or more recesses on a second element relative to which it moves during angular variation. The protrusion may be a pin. The pin may be provided in the mounting and the recesses in the block of the linking means or vice versa.

Advantageously the clamp may be provided according to two, and ideally all three, of the particularly preferred forms indicated above. The combined form of the clamp may of course further include the possibilities identified for the various particularly preferred forms.

The three particularly preferred forms of the invention may further, individually or in any combination include the following features and possibilities.

Preferably the clamping surfaces are defined by profile defining means mounted on the arms. The profile defining means may be detachable, for instance to allow attachment of another profile defining means, from amongst a number provided, to be attached. The profile defining means preferably provide the clamping surfaces in the form of arcs or crescents. Preferably a plurality of arcs are provided, most preferably of different radii. The radii are ideally between 5mm and 120mm. The profile defining means are preferably restrained in the position of use. The profile defining means are preferably releaseable to allow presentation of an alternative clamping surface, for instance by rotation. Preferably this adjustment is indexed.

The two arms of a pair may be provided with separate pivotal mountings on the mounting. The separate pivotal mountings may be spaced from one another in the direction that the clamping surfaces are spaced from one another.

According to a second aspect of the invention we provide a method of fixing two items in a fixed position relative to one another, the method comprising clamping the two items in a clamp according to the first aspect of the invention.

Preferably the method includes the steps of fixing the two components relative to one another and subsequent removal of the clamp. Preferably the fixing method comprising applying an electrofusion process to one or both of the items and/or a coupling/fitting for one or both of the items.

The electrofusion process may comprise introducing an electrofusion coupling into contact with a portion of the first item and a portion of the second item, and further comprise passing a current through the electrofusion coupling.

Various embodiments of the invention will now be described, by way of example only, and with reference to the accompanying drawings, in which :-
Figure 1 illustrates a perspective view of one embodiment of the present invention; and
Figure 2 illustrates a detail view of a part of one end of the clamp, in cross-section.

In many operations it is desirable to hold two or more items in position relative to one another, for a period of time or during an operation. An example of such a process is electrofusion welding.

In electrofusion welding two thermoplastic components, generally pipes, are positioned relative to one another with an electrofusion coupling bridging the two. The application of power to the coupling results in resistance heating of the coupling and the pipes and partial melting of the components. When the components are allowed to cool and resolidify a secure joint is obtained. Such joints find extensive application in utility supply, such as gas mains.

Holding the two components rigid relative to one another is an important feature of gaining a successful weld.

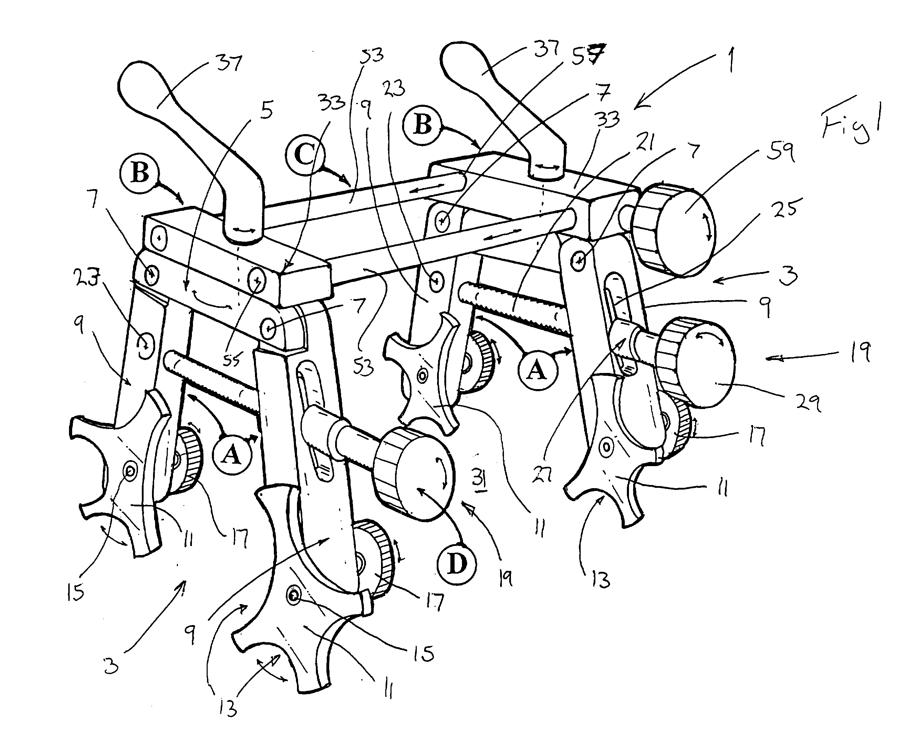

The clamp 1 illustrated in Figure 1 comprises two sets 3 of clamping components. Each set of clamping components 3 comprises a spacing element 5 which provides a pivotal mounting 7 for each of two arms 9. The arms 9 extend away from the element 5 and carry removable profiles 11.

The profiles 11 are provided with a range of scooped sections 13 of differing radii to accommodate differing radii of pipes during clamping. By providing a radii equating to or closely conforming to the pipe radii a secure clamping action is provided. A number of different profiles 11 may accompany the clamp 1 and be changed over as required.

The profiles 11 are mounted on an axis 15 in each case to allow their repositioning. The profiles 11 can be released, rotated to a new indexed position and fixed by rotating discs 17.

The position of the arms 9 of a pair relative to one another is controlled through adjustment means 19. The adjustment means 19 are formed by a screw threaded bar 21 fixed to an arm 9 at a mounting 23 and passing through a slot 25 in the other arm 9 of the pair. The bar 21 is also provided with a collar 27 threaded on the bar 21 and provided with a handle 29 by which it can be rotated. Rotation of the handle 29 advances or retracts the collar 27 on the bar, depending on the direction of rotation. The collar 27 has a greater dimension than the slot 25 and hence abuts on the arm and hence can be used to reduce the spacing between the profiles 11 and provide the clamping action.

An equivalent set of adjustment means is separately provided for each pair of arms.

The adjustment of the present invention is beneficial in allowing independent adjustment of each pair of arms, both in time and in terms of the separation to which they are clamped. Additionally the space 31 between the two pairs of arms is left free and fully available. This is significant in clamping arrangements which involve pipes with tapping tees or the like which extend into this space 31 and which would otherwise clash with the clamp. This is particularly problematical where the fitting has a short spigot and/or limited clearance between the stem and the main pipe, as the available range of positions the clamp can be provided in is still further reduced in such cases.

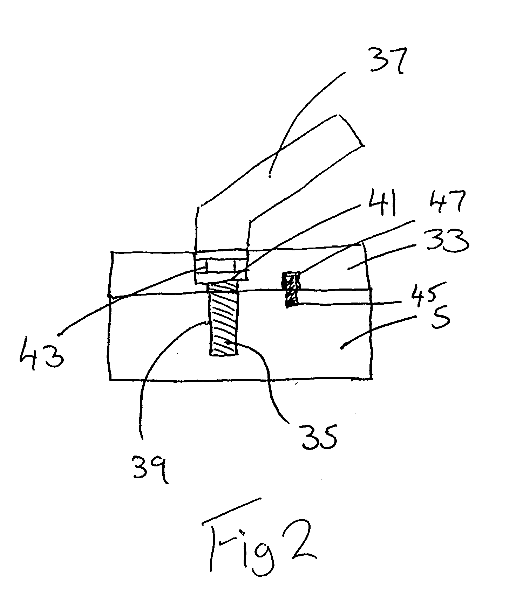

The spacing elements 5 of each set 3 are attached to blocks 33 via a single axial element 35 corresponding to the axis of rotation of handle 37, see Figure 2. Rotation of handle 37 can be used to rotate the element 35 upwards in bore 39 and hence release the clamping action between the underside of the enlarged head 41 of the threaded element 35 and the recess 43 in the block 33. Rotation of the clamping set 3 relative to the block 33 and hence relative to the other clamping set 3 is provided.

Control of the rotation of the block 33 and element 5 relative to one another is provided by a pin 45 in the top surface of the element 5 which is received in an arcuate groove 47 in the underside of the block 33. The groove allows rotation of 50° or so in either direction relative to the square position, but no further.

Control of the rotation can also be provided through the use of an indexing pin which is spring loaded in the element 5 and can cooperate with a series of corresponding holes in the block 33, for instance square and at 45° in either direction.

Rotating the handle 37 in the opposing direction locks the block 33 and element 5 in position once more.

The freedom to offset one or both pairs of arms 9 from the square on position so as to clamp components gives greater versatility to the clamp.

The blocks 33 on each of the clamping sets 3 are joined to one another by a pair of rods 53. The rods 53 are received in a bores 55 in the front block 33 in a fixed manner, but are slideably received in through bores 57 in the back block 33. This allows the back block to be slid back and forth, in a telescoping manner, relative to the front block as a result. The rear block 33 can be fixed in position by tightening handle 59.

Telescoping the arm pairs in this way allows a variety of gaps between the pairs of arms to be provided. This enables a variety of lengths of fitting to be successfully accommodated whilst clamping close to the fitting. It also enables a clamp length 1.5 times the length of the fitting to be provided (a frequently specified requirement for recommended fitting use) for a range of different fittings, through a single clamp.

## Claims

1. A clamp, wherein the clamp comprises a first pair of arms on a first mounting and a second pair of arms on a second mounting, the first and second mountings being connected to one another and spaced from one another by linking means, each arm carrying a clamping surface which opposes a clamping surface on another arm, the spacing between the opposing clamping surfaces being adjustable.

2. A clamp according to claim 1 in which the means for adjusting the spacing between the opposing clamping surfaces are mounted on the arms carrying the clamping surfaces, the adjusting means comprising an element mounted on one of the arms and passing through a slot in the opposing arm.

3. A clamp according to claim 1 or claim 2 in which the spacing between the first pair of arms and the second pair of arms and/or between their respective mountings is variable.

4. A clamp according to any preceding claim in which the angular orientation of the first pair of arms and/or the second pair of arms can be altered relative to the other pair.

5. A clamp according to claim 2 or any claim depending therefrom in which the slot extends along the length of the arm, from the pivotal mounting towards the end of the arm.

6. A clamp according to claim 4 or claim 5 in which the element is provided with a threaded portion, the threaded portion engaging with a threaded portion of a component provided on the outside of the slot, the outside component being dimensioned relative to the slot such that it cannot pass through the slot upon rotation.

7. A clamp according to claim 3 or any claim depending thereon in which the variation is provided by slideably mounting one or both of the mountings on the linking means.

8. A clamp according to any preceding claim in which the linking means comprise one or more parallel elongate elements.

9. A clamp according to claim 7 or any claim depending thereon in which the slideable mounting or mountings are provided with securing means for fixing the position of the mounting.

10. A clamp according to claim 4 or any claim depending thereon in which the plurality of angles is provided by rotation, the first and/or the second mountings being rotated relative to the linking means to achieve the different angles.

11. A clamp according to claim 10 in which the first and/or second mountings are rotatably mounted on blocks forming part of the linking means.

12. A clamp according to claim 10 or claim 11 in which the linking means are provided with releaseable means to secure the angular position.

13. A clamp according to claim 4 or any claim depending thereon in which the adjustment of the angular position is indexed, the indexing being provided by cooperating of a protrusion on one element with one or more recesses on a second element relative to which it moves during angular variation.

14. A clamp according to any preceding claim in which the clamping surfaces are defined by profile defining means mounted on the arms.

15. A clamp according to claim 14 in which the profile defining means provide the clamping surfaces in the form of arcs or crescents.

16. A method of fixing two items in a fixed position relative to one another, the method comprising clamping the two items in a clamp, the clamp comprises a first pair of arms on a first mounting and a second pair of arms on a second mounting, the first and second mountings being connected to one another and spaced from one another by linking means, each arm carrying a clamping surface which opposes a clamping surface on another arm, the spacing between the opposing clamping surfaces being adjustable.
